# EUROPÄISCHE PATENTSCHRIFT

(11) **EP 0 353 698 B1**
(45) Veröffentlichungstag und Bekanntmachung des Hinweises auf die Patenterteilung: **03.11.1993**
(21) Anmeldenummer: 89114141.8
(22) Anmeldetag: 01.08.1989
(51) Int. Cl.: B60K 17/10, F16H 47/02

(54) **Antrieb für Kraftfahrzeuge**
Drive unit for motor vehicles
Dispositif d'entraînement pour véhicules automobiles

(30) Priorität: 03.08.1988 DE 3826341
(43) Veröffentlichungstag der Anmeldung: 07.02.1990
(73) Patentinhaber: DEERE & COMPANY, Moline, Illinois 61265 (US)
(72) Erfinder: Butz, Dieter, D-6800 Mannheim 31 (DE); Erbach, Franz, D-6701 Otterstadt (DE); Müller, Kurt, D-6840 Lampertheim (DE)
(74) Vertreter: Feldmann, Bernhard

(56) Entgegenhaltungen:
- EP-A- 0 140 046
- WO-A-89/12188
- DE-A- 1 655 584
- DE-A- 2 160 243
- DE-A- 2 313 784
- DE-A- 2 900 776
- DE-A- 3 224 968
- FR-A- 2 353 768
- GB-A- 1 491 964
- US-A- 3 780 820
- PATENT ABSTRACTS OF JAPAN vol. 8, no. 174 (M-316)(1611) 10 August 1984, & JP-A-59 67120 (HITACHI KENKI) 16 April 1984,

## Beschreibung

Antrieb für Kraftfahrzeuge, insbesondere Schlepper, mit einem Verbrennungsmotor, dem wenigstens ein Schaltgetriebe und eine Antriebswelle zum Antrieb der Vorder- und/oder Hinterräder nachgeordnet sind, und auf dessen Antriebswelle ein Zahnrad drehbar gelagert ist, welches durch eine axial verschiebbare Schaltmuffe kraftschlüssig mit der Antriebswelle verbindbar ist, und mit einem Hydraulikmotor zum wahlweisen Antrieb der Antriebswelle, der von einer den Hochdruckhydraulikkreis des Fahrzeuges aufrechterhaltenden Hydraulikpumpe gespeist wird und über Getriebemittel in ständigem Eingriff mit dem drehbar gelagerten Zahnrad steht.

Schaltgetriebe in Kraftfahrzeugen mit Verbrennungskraftmaschinen dienen dazu, bei optimaler Ausnutzung der Antriebsleistung unterschiedliche Fahrgeschwindigkeiten zu realisieren. Um extrem hohe Unterschiede der Fahrgeschwindigkeit, wie sie beispielsweise bei landwirtschaftlichen Fahrzeugen gefordert werden können, zu realisieren, werden häufig neben den Schaltgetrieben Zusatzgetriebe wie Gruppengetriebe oder Kriechganggetriebe verwendet.

Insbesondere bei Ackerschleppern besteht häufig die Forderung nach einem extrem langsamen Antrieb, der z.B. beim Pflanzen benötigt wird, und zwischen 0 und 2 km/h betragen kann. Für solche niedrigen Geschwindigkeiten werden Kriechganggetriebe verwendet. Durch die relativ kleinen Drehzahlen treten relativ große Drehmomente auf, so daß die Kriechganggetriebe relativ groß ausgebildet werden müssen, was teuer ist.

Übliche Getriebe haben ferner die Eigenart, daß ein stufenloser Antrieb über größere Geschwindigkeitsbereiche nicht möglich ist. Auch ist eine Geschwindigkeit, die nur wenig von Null abweicht, nur mit schleifender Kupplung erreichbar.

Durch die DE-OS 2 313 784 ist eine Vorrichtung zur Kraftübertragung für Kraftfahrzeuge, insbesondere Maschinen zum Ebenen bzw. Planieren der Straßen, bekannt geworden, durch die die Antriebswelle für den Antrieb der Hinterräder wahlweise entweder unmittelbar durch die Kraftmaschine oder durch einen Hydraulikmotor antreibbar ist. Die Umschaltung erfolgt in einem Umschaltgetriebe, in dessen Bereich die zwischen dem Kraftantrieb und den Antriebsrädern vorlaufende Antriebswelle unterbrochen ist. Das Getriebe enthält eine mit der Kraftmaschine in Verbindung stehende erste Eingangswelle und eine mit den Hinterrädern in Verbindung stehende erste Ausgangswelle. Diese beiden Wellen lassen sich durch das Getriebe miteinander verbinden, wodurch ein unmittelbarer Antrieb der Räder durch die Kraftmaschine erfolgt. Das Getriebe enthält ferner eine zweite Eingangswelle, die mit einem Hydraulikmotor in Verbindung steht und eine zweite Ausgangswelle, die mit einer Hydraulikpumpe verbunden ist. Die Hydraulikpumpe liefert den Hydraulikdruck für den Hydraulikmotor. Wird das Getriebe auf Hydraulikantrieb umgeschaltet, so wird die Verbindung zwischen erster Eingangswelle und erster Ausgangswelle getrennt und die erste Eingangswelle mit der zweiten Ausgangswelle sowie die zweite Eingangswelle mit der ersten Ausgangswelle verbunden.

Das bekannte Umschaltgetriebe enthält eine Vielzahl von Bauteilen und ist daher in der Herstellung relativ kostenaufwendig. Der nachträgliche Einbau eines solchen Getriebes in ein bereits fertiggestelltes Fahrzeug ist nur mit relativ großem Aufwand möglich. Die Unterbrechung des Antriebsstrangs im Bereich des Umschaltgetriebes kann die Quelle von Störungen sein.

Die EP-A-0 140 046 beschreibt eine hydrostatisch-mechanische Getriebeanordnung, die im wesentlichen der eingangs genannten Art entspricht. Hierbei ist zwischen einer Verstellpumpe und einem Hydromotor ein Umschaltventil eingesetzt, welches die Verstellpumpe wahlweise auf den Hydromotor oder eine Arbeitshydraulik umschalten kann. Die verschiedenen Betriebszustände sind durch elektrische Steuersignale auslösbar, die von einem elektronischen Steuergerät kontrolliert werden. Über Leitungen werden die erzeugten Ausgangssignale der Antriebsmaschine zur Einstellung der erforderlichen Ausgangsdrehzahl, einem Vorsteuerventil, das das Umschaltventils hydraulisch ansteuert, und zwei Schaltventilen für Vorwärts- und Rückwärtsfahrt zugeführt. Die Einstellung der Fahrzeuggeschwindigkeit erfolgt beim hydraulischen Kriechgangantrieb durch Steuerung der Antriebsmaschinendrehzahl, so daß ein von der Fahrtgeschwindigkeit unabhängiger Zapfwellenbetrieb nicht möglich ist.

Eine Einrichtung für die Kraftübertragung eines Traktors, bei der eine Umschaltung zwischen einem mechanischen Getriebe und einem hydraulischen Antrieb vorgesehen ist, geht aus der DE-A-1 655 584 hervor. Der hierbei verwendete hydraulische Motor läßt sich über ein Dreistellungs- und Vierwegeventil an ein Druckleitungssystem anschließen, so daß der hydraulische Motor vorwärts oder zurück bewegt, oder aber auch in eine Neutralstellung geschaltet werden kann. Wie eine Einstellung der Fahrtgeschwindigkeit erfolgt, ist nicht angegeben.

Die mit der Erfindung zu lösende Aufgabe wird darin gesehen, einen Antrieb für Kraftfahrzeuge der eingangs genannten Art zu schaffen, durch den die genannten Probleme überwunden werden und der eine einfache stufenlose Einstellung zwischen Stillstand und einer relativ niedrigen Geschwindigkeit des Fahrzeuges in beide Fahrtrichtungen erlaubt.

Die Aufgabe wird nach der Erfindung dadurch gelöst, daß zur Leistungseinstellung des Hydraulikmotors zwischen der Hydraulikpumpe und dem Hydraulikmotor ein elektrisch steuerbares Proportionalventil angeordnet ist, welches durch ein Potentiometer einstellbar ist.

Die Leistung des Hydraulikantriebes wird durch ein elektrisch steuerbares Proportionalventil eingestellt, wobei bei fehlendem elektrischen Steuersignal das Proportionalventil in seine Ruhestellung übergeht, bei der kein Hydraulikdruck an den Hydraulikmotor abgegeben wird. Die Einstellung des Proportionalventils erfolgt über ein Potentiometer. Bei Nullstellung des Potentiometers gibt der Hydraulikmotor keine Leistung ab.

Der elektrische Steuerkreis wird derart verriegelt, daß der Hydraulikantrieb dann außer Funktion gesetzt wird, wenn ein Gang des Schaltgetriebes eingelegt ist. Hierdurch wird vermieden, daß sowohl der mechanische Antrieb als auch der Hydraulikantrieb auf den Fahrantriebsstrang einwirken.

Der elektrische Steuerkreis wird mit einer Verriegelungsschaltung versehen, die bei Betätigung einer Bremse den Hydraulikantrieb abschaltet. Diese Verriegelung ist zweckmäßig, da die Bremsen gewöhnlich zu schwach sind, um das hohe Drehmoment des Hydraulikantriebes zu überwinden.

Eine weitere Verriegelung des Steuerkreises sieht vor, daß nach dem Herausnehmen eines Ganges oder nach einer Bremsbetätigung die Inbetriebnahme des Hydraulikantriebes nur dann wieder erfolgen kann, wenn zuvor das elektrische Steuersignal auf Null gesetzt wurde. Diese Verriegelung stellt sicher, daß nach einer Fahrt mit der Verbrennungskraftmaschine sich der Hydraulikantrieb nicht ungewollt einschaltet, so daß das Fahrzeug aufgrund des Hydraulikantriebes weiterfährt, wenn der Gang des Schaltgetriebes herausgenommen wird.

Um einen ungewollten Betrieb des Hydraulikantriebes zu vermeiden, ist es auch zweckmäßig, eine derartige Verriegelungsschaltung vorzusehen, daß eine Inbetriebnahme des Fahrzeuges über das Zündschloß nur dann zugelassen wird, wenn der Hydraulikantrieb nicht im Eingriff mit dem Antriebsstrang des Fahrzeuges steht.

Vorzugsweise wird der Hydraulikmotor von einer den Hochdruckhydraulikkreis des Fahrzeuges ständig aufrechterhaltenden Hydraulikpumpe gespeist und steht über Getriebemittel in ständigem Eingriff mit dem drehbar gelagerten Zahnrad.

Der in den Antriebsstrang einfügbare Hydraulikmotor ist stufenlos auf unterschiedliche Geschwindigkeiten in einem Geschwindigkeitsbereich, der zwischen Rückwärtsfahrt und Vorwärtsfahrt liegt, einstellbar. Es lassen sich auch Geschwindigkeiten einstellen, die nur sehr wenig vom Stillstand des Fahrzeuges abweichen. Ferner erfordert es keinen größeren Eingriff in den Fahrzeugantriebsstrang, um den Hydraulikmotor nachträglich in ein fertiggestelltes Fahrzeug einzubauen.

Der erfindungsgemäße Antrieb ist kostengünstig herstellbar und in ein bereits fertiggestelltes Fahrzeug nachrüstbar. Dazu sind lediglich der übliche Wellenabschnitt gegen einen solchen mit einem drehbaren Zahnrad und einer mit diesem zusammenwirkenden Schaltmuffe auszutauschen und die genannten Getriebemittel anzubringen. Es ist auch möglich, das Fahrzeug von vorneherein serienmäßig mit einer für den Hydraulikantrieb geeigneten Welle zu versehen, so daß eine Nachrüstung ohne Wellenwechsel möglich ist. Die bereits im Fahrzeug befindliche Hochdruckhydraulikpumpe kann für den Hydraulikantrieb nutzbar gemacht werden, so daß hier keine zusätzlichen Kosten anfallen. Die Antriebswelle läuft beidseits der Hydraulikkrafteinspeisung mit gleicher Drehzahl um, das heißt im Falle einer aus mehreren Teilen bestehenden Antriebswelle sind deren Einzelteile drehfest miteinander verbunden.

Vorzugsweise trägt die Antriebswelle einen Zahnkranz, der durch eine Schaltmuffe mit einem durch den Hydraulikmotor angetriebenen Zahnkranz in Eingriff bringbar ist. Beim Nachrüsten besteht der Eingriff in den Antriebsstrang lediglich darin, daß auf die Antriebswelle ein Zahnkranz aufgebracht wird. Der Hydraulikmotor kann dann in der Nähe dieses Zahnkranzes am Fahrgestell befestigt werden.

Um Leistung zu sparen, ist es zweckmäßig, den Hydraulikantrieb dann vom Antriebsstrang abzukuppeln, wenn das Kraftfahrzeug über die Verbrennungskraftmaschine und das mechanische Getriebe angetrieben wird. Hierfür dient die konzentrisch auf der Antriebswelle axial verschiebbar angeordnete Schaltmuffe, die auch bei Vorliegen einer Restlast ein Schalten zuläßt. Die Schaltmuffe ist drehfest mit der Antriebswelle verbunden und bei axialer Verschiebung mit dem drehbar gelagerten Zahnrad in Eingriff bringbar. Das Zahnrad steht in ständigem Eingriff mit dem Hydraulikmotor. Grundsätzlich läßt sich ein Zahnrad auch starr auf der Antriebswelle anordnen und eine mit diesem Zahnrad in Eingriff stehende Schaltmuffe axial verschiebbar ausbilden.

Eine komfortablere, jedoch auch aufwendigere Lösung für die schaltbare Verbindung zwischen Hydraulikmotor und Antriebswelle als sie durch ein Muffenschaltgetriebe gegeben ist, läßt sich vorteilhaft dadurch erreichen, daß der Hydraulikantrieb über eine Lamellenkupplung einrückbar ist.

Gemäß einer bevorzugten Ausführungsform der Erfindung ist der Hydraulikmotor am Hydraulikantriebsgehäuse befestigt. Er weist eine gezahnte Abtriebswelle auf, die sich in das Innere des Hydraulikantriebsgehäuses erstreckt. Diese gezahnte Abtriebswelle ist von einer Zahnradhohlwelle umgeben, welche eine Innenverzahnung trägt, die mit der Verzahnung der Antriebswelle des Hydraulikantriebes in Eingriff steht. Die Zahnradhohlwelle trägt ferner einen äußeren Zahnkranz für die Kraftübertragung zur Antriebswelle des Fahrzeugs. Die genannte Zahnradhohlwelle ist im Hydraulikantriebsgehäuse gelagert. Diese Ausführung hat den Vorteil, daß das Antriebsteil (Zahnradhohlwelle), in das der Abtriebsschwengel (Abtriebswelle) des Hydraulikmotors eingreift, selbst gelagert ist, so daß sich eine fliegende Lagerung ergibt.

Vorzugsweise ist diese Anordnung so ausgebildet, daß der äußere Zahnkranz der Zahnradwelle mit dem Zahnkranz eines konzentrisch und drehbar auf der Antriebswelle des Fahrzeugs gelagerten Zahnrades kämmt. Dieses Ausführungsmerkmal eignet sich besonders für Ausbildungen mit Muffenschaltgetriebe (wie oben beschrieben) oder mit Lamellenkupplung.

Es ist von besonderem Vorteil, wenn die Antriebswelle des Fahrzeugs im Bereich des Hydraulikantriebes unterbrochen ausgebildet ist. Zur Gewährleistung der Kraftübertragung kann dabei ein Wellenende eine in Längsrichtung verlaufende Außenverzahnung und das andere Wellenende eine stirnseitige Ausnehmung mit korrespondierender Innenverzahnung aufweisen. Diese Verzahnung ermöglicht eine axiale Verschiebung der Wellenenden zueinander, die insbesondere bei der Montage erforderlich sein kann. Es ist zweckmäßig, den Hydraulikantrieb als kompletten Bausatz auszubilden, der einen Antriebswellenabschnitt enthält. Zur Montage dieses Bausatzes an einem bereits betriebsbereiten Fahrzeug ist es lediglich erforderlich, die vorhandene Antriebswelle durch eine verkürzt ausgebildete Antriebswelle auszutauschen und das Antriebswellenteilstück des Bausatzes in den Antriebsstrang zwischenzuschalten.

Besonders zweckmäßig ist es, den hydraulischen Fahrantrieb im Bereich des Ausganges des Kupplungsgehäuses anzuordnen. Dabei sind vorzugsweise zwischen dem Hydraulikantriebsgehäuse und dem Kupplungsgehäuse zwei axial hintereinander liegende Zwischenflansche vorzusehen. Die Zwischenflansche dienen der Einstellung eines axialen Spiels für die Lagerung (Kegelrollenlager) des Hydraulikantriebsgehäuses auf der Antriebswelle des Fahrzeuges. Ein erster Zwischenflansch dient der Ausdistanzierung der Kegelrollenlager zum Kupplungsgehäuse hin, während ein zweiter Zwischenflansch der Ausdistanzierung der Kegelrollenlager zum Hydraulikgetriebegehäuse hin dient.

Zur Vermeidung unnötiger Leistungsverluste und Materialbeanspruchung sollte lediglich einer der beiden Antriebe (mechanischer oder hydraulischer Fahrantrieb) als Fahrzeugantrieb in Eingriff sein. Dieses Ziel läßt sich über eine elektrisch gesteuerte Verriegelungsschaltung erreichen. Dies macht es wünschenswert, daß das Einrücken des Zahnkranzes, der Schaltmuffe bzw. der Lamellenkupplung durch elektrische Steuersignale ausgelöst wird. Eine bevorzugte Ausbildung der Erfindung schlägt daher vor, daß der Zahnkranz der Antriebswelle, die Schaltmuffe bzw. die Lamellenkupplung über ein Hebelgestänge mit einem Schaltzylinder verbunden ist. Der Schaltzylinder wird seinerseits über Hydraulikflüssigkeit durch ein elektromagnetisch steuerbares Hydraulikventil betätigt.

Besonders vorteilhaft läßt sich der hydraulische Fahrantrieb bei solchen Fahrzeugen realisieren, die bereits über ein Hydrauliksystem verfügen. Dabei wird vorzugsweise der Hydraulikmotor durch einen Hydraulikhochdruckkreis und der Schaltzylinder durch einen Hydraulikniederdruckkreis gespeist. Bei Schleppern sind gewöhnlicherweise beide Kreise bereits vorhanden. Der Hochdruckkreis dient dem Antrieb von Arbeitsgeräten, während der Niederdruckkreis als hydraulischer Schmier- und Steuerkreis zur Verfügung steht.

Zur Gewährleistung eines störungsfreien Betriebes werden eine Reihe besonders bevorzugter Merkmale eines Steuerkreises beansprucht:
Das Fahrzeug wird nur dann durch den Hydraulikantrieb angetrieben (Hydraulikmotor gibt Leistung ab und Zahnräder zwischen Hydraulikmotor und Antriebswelle des Fahrzeuges sind eingerückt), wenn hierfür ein ausdrückliches Steuersignal vorliegt. Bei Kabelbruch oder anderen Störungen ist der Hydraulikantrieb nicht im Eingriff.

Anhand der Zeichnung, die ein Ausführungsbeispiel der Erfindung zeigt, sollen die Erfindung sowie weitere Vorteile und vorteilhafte Ausgestaltungen der Erfindung erläutert und näher beschrieben werden.

Es zeigt:
- Fig. 1: einen Ackerschlepper mit erfindungsgemäßem Antrieb in schematischer Darstellung,
- Fig. 2: einen erfindungsgemäßen Hydraulikantrieb,
- Fig. 3: eine Hydraulikversorgung des Hydraulikmotors und
- Fig. 4: einen Hydraulikkreis für den Schaltzylinder.

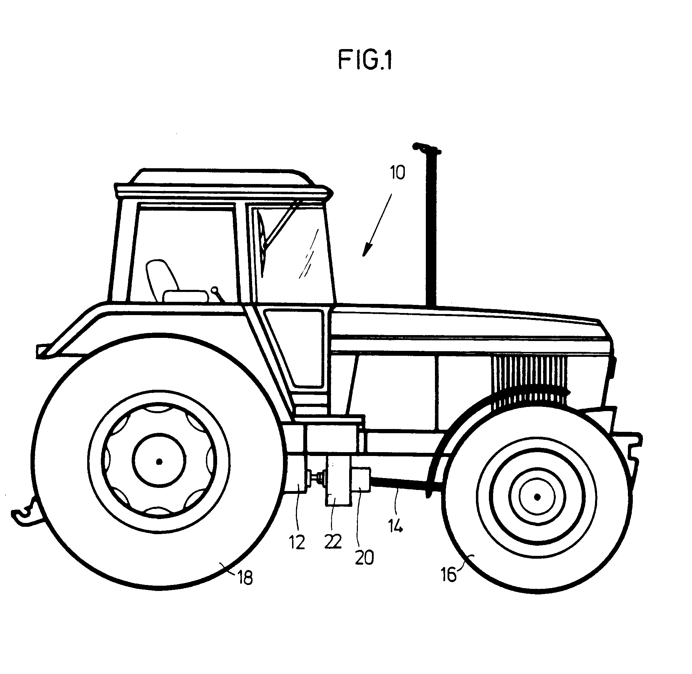

In Fig. 1 sind die Umrisse eines Ackerschleppers schematisch dargestellt, der als Fahrantrieb eine Verbrennungskraftmaschine, ein Schaltgetriebe, eine Kupplung in einem Kupplungsgehäuse 12, eine Antriebswelle 14 sowie Vorderräder 16 und Hinterräder 18 enthält. Unterhalb des Schlepperchassis befindet sich im Bereich der Antriebswelle 14 ein hydraulischer Fahrantrieb, mit einem Hydraulikmotor 20 und einem Getriebegehäuse 22.

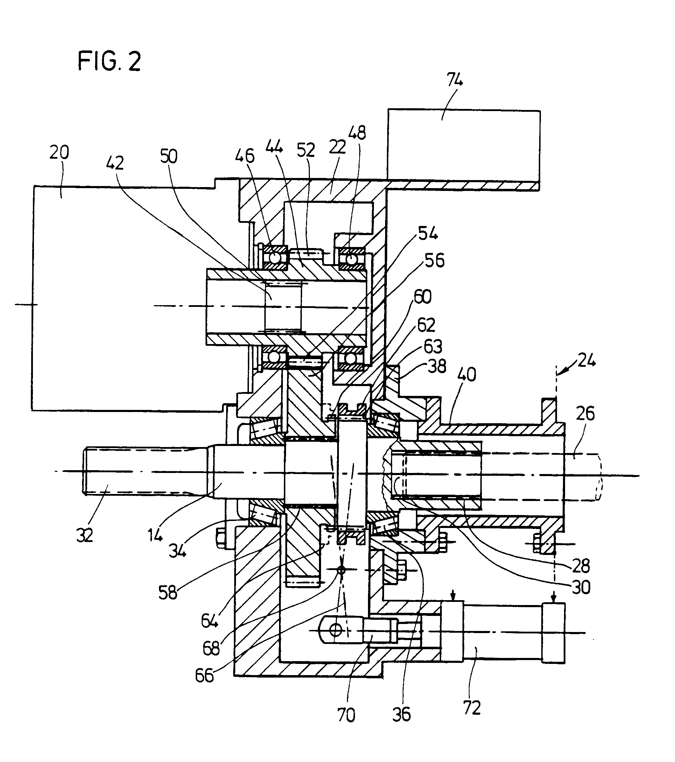

Wie aus Fig. 2 ersichtlich ist, ist die Antriebswelle 14 des Schleppers 10 mehrteilig ausgebildet. Aus dem Kupplungsgehäuse 12 von dem in Fig. 2 lediglich die Begrenzung durch eine gestrichelte Linie 24 angedeutet ist, ragt der gestrichelt gezeichnete Teil einer Ausgangswelle 26 heraus. Diese Ausgangswelle 26 trägt an ihrem Wellenende eine Außenverzahnung 28, wobei die Zähne axial ausgerichtet sind. Die Außenverzahnung 28 der Ausgangswelle 26 ist in eine strinseitige Ausnehmung 30 einer Antriebswelle 14 eingeführt. Die Ausnehmung 30 trägt eine Innenverzahnung, welche mit der Außenverzahnung 28 der Ausgangswelle 26 korrespondiert. Beide Wellen 14, 26 lassen sich im Bereich ihrer Verzahnung axial gegeneinander verschieben. Das freie Ende 32 der Antriebswelle 14 ist mit der nicht dargestellten Gelenkwelle verbindbar, die zu den Vorderrädern 16 führt.

Die Antriebswelle 14 ist über Kegelrollenlager 34, 36 im Hydraulikgetriebegehäuse 22 gelagert, welches sich seinerseits am Schlepperchassis abstützt. Ferner ist das Hydraulikgetriebegehäuse 22 über zwei Zwischenflansche 38, 40 mit dem Kupplungsgehäuse 12 verbunden. Die Zwischenflansche 38, 40 dienen der Einstellung des axialen Spiels für die Kegelrollenlager 34, 36. Am Hydraulikgetriebegehäuse 22 ist ein Hydraulikmotor angeflanscht, dessen Abtriebswelle 42 ins Innere des Hydraulikgetriebegehäuses 22 ragt.

Die Abtriebswelle 42 des Hydraulikmotors 20 ragt in das Innere einer hohlen Zahnradwelle 44, die im Hydraulikgetriebegehäuse 22 durch zwei Kugellager 46, 48 gelagert ist und deren Achse parallel zur Achse der Antriebswelle 14 ausgerichtet ist. Die Zahnradwelle 44 weist eine Innenverzahnung 50 mit axial ausgerichteten Zähnen auf, die mit der Verzahnung der Antriebswelle 42 des Hydraulikmotors 20 korrespondiert. Ferner trägt die Zahnradwelle 44 einen äußeren Zahnkranz 52. Dieser Zahnkranz 52 greift in den Zahnkranz 54 eines Zahnrades 56 ein, welches über Nadelkränze 58 auf der Antriebswelle 14 drehbar gelagert ist. Das Zahnrad 56 trägt einen weiteren Zahnkranz 60, der Teil eines Muffenschaltgetriebes ist. Die Schaltmuffe 62 des Muffenschaltgetriebes trägt einen inneren Zahnkranz 63 und ist drehfest und axial verschiebbar auf der Antriebswelle 14 gelagert. Fig. 2 zeigt die Schaltmuffe 62 in einer nicht eingerückten Lage. Bei eingerückter Lage der Schaltmuffe 62, wie sie durch eine gestrichelte Umrißlinie 64 angedeutet ist, besteht Kraftschluß zwischen dem Hydraulikmotor 20 und der Antriebswelle 14 über die Abtriebswelle 42, die Innenverzahnung 50 und den äußeren Zahnkranz 52 der Zahnradwelle 44, die Zahnkränze 54 und 60 des Zahnrades 56 und die Schaltmuffe 62.

Die axiale Verschiebung der Schaltmuffe 62 wird durch ein Hebelgestänge 66 vorgenommen, welches lediglich durch strichpunktierte Linien angedeutet wurde. Das Hebelgestänge 66 ist in dem Drehpunkt 68 verschwenkbar. Das der Schaltmuffe 62 gegenüberliegende Ende des Hebelgestänges 66 ist mit der Kolbenstange 70 eines Schaltzylinders 72 verschwenkbar verbunden. Durch eine axiale Verschiebung der Kolbenstange 70 im Schaltzylinder 72 wird das Hebelgestänge 66 um den Drehpunkt 68 verschwenkt und die Schaltmuffe 62 axial auf der Antriebswelle 14 verschoben.

Der Schaltzylinder 72 ist am Hydraulikgetriebegehäuse 22 befestigt. Ferner ist am Hydraulikgetriebegehäuse 22 ein elektromagnetisch steuerbares Hydraulikventil 74 befestigt, welches der Steuerung des Schaltzylinders 72 dient.

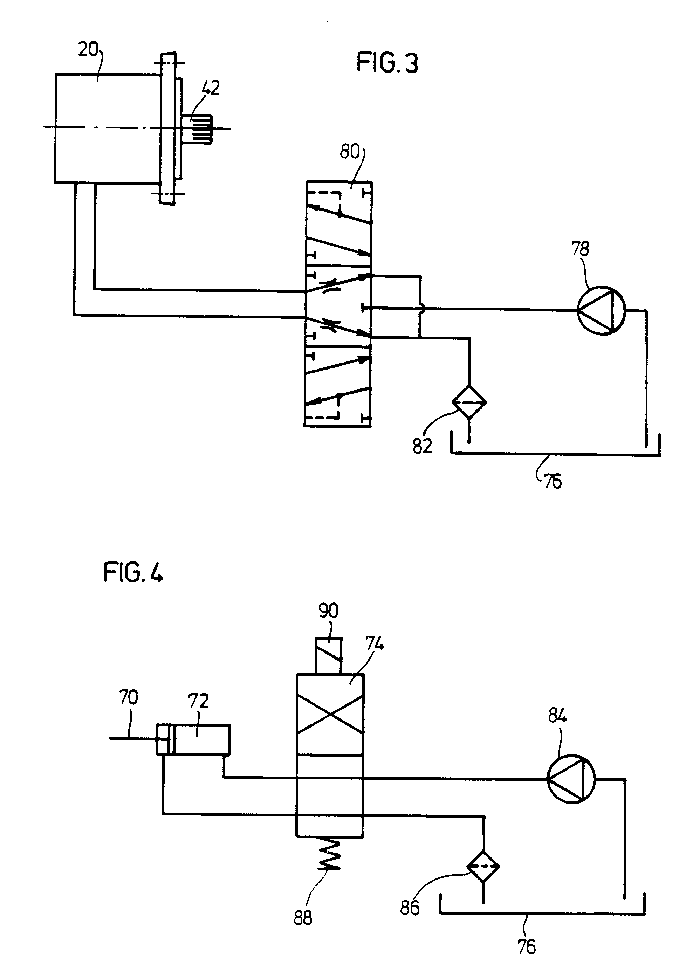

Aus Fig. 3 geht der Hydraulikkreis für den Hydraulikmotor 20 hervor. Das Hydrauliköl wird aus einem Sammelbehälter 76 durch eine Hydraulikpumpe 78 angesaugt und gelangt über ein Hydraulikventil 80 zu dem Hydraulikmotor 20. Es wird über eine Rückleitung zu dem Hydraulikventil 80, und von dort durch einen Filter 82 zum Sammelbehälter 76 zurückgeführt. Bei dem Hydraulikventil 80 handelt es sich um ein 4-Wege-3-Positions-Proportionalventil. In der mittleren Position sind beide Hydraulikleitungen des Hydraulikmotors 20 mit dem Sammelbehälter 76 verbunden. Bei Einstellung einer äußeren Position des Hydraulikventils 80 dreht sich die Abtriebswelle 42 des Hydraulikmotors 20 rechts- oder linksherum. Die Einstellung der Lage des elektromagnetisch betätigbaren Hydraulikventiles 80 erfolgt über ein nicht dargestelltes Potentiometer, das von einer Nullstellung aus in beide Richtungen verstellbar ist. Entsprechend der Einstellung des Potentiometers läßt sich die Abtriebsdrehzahl des Hydraulikmotors steuern.

Fig. 4 zeigt den hydraulischen Steuerkreis für den Schaltzylinder 72. Das Hydrauliköl wird auch hier einem Sammelbehälter 76 entnommen und durch eine Hydraulikpumpe 84 zu einer Kammer des Schaltzylinders 72 gepumpt. Die andere Kammer des Schaltzylinders 72 steht über einen Filter 68 mit dem Sammelbehälter 76 in Verbindung. Dem Schaltzylinder 72 ist ein elektromagnetisch steuerbares Hydraulikventil 74 vorgeschaltet, welches der Steuerung des Schaltzylinders 72 dient. Es handelt sich bei dem Ventil 74 um ein 4-Wege-2-Positionsventil, welches durch eine Feder 88 in seine dargestellte Ruhelage vorgespannt ist. In dieser Ruhelage wird die Kolbenstange 70 des Schaltzylinders 72 gemäß Fig. 4 nach links bewegt. Hierdurch wird die Schaltmuffe 62 des Hydraulikantriebes über das Hebelgestänge 66 nach rechts gemäß Fig. 2 bewegt, so daß der Hydraulikantrieb nicht in Eingriff mit der Antriebswelle 14 steht. Bei Erregung der Magnetspule 90 des Hydraulikventiles 74 verschiebt sich die Ventilstellung, so daß nun Hydrauliköl in die andere Kammer des Schaltzylinders 72 gedrückt wird. Hierdurch wird die Kolbenstange 60 nach rechts verschoben, was zum Einrücken der Schaltmuffe 62 in den Zahnkranz 60 führt, so daß nunmehr der Hydraulikantrieb mit der Antriebswelle 14 in Verbindung steht.

Bei den in den Figuren 3 und 4 dargestellten Hydraulikpumpen 78 und 84 handelt es sich um Hydraulikpumpen, die bereits in dem Schlepper 10 vorhanden sind. Bei der Hydraulikpumpe 78 zur Versorgung des Hydraulikmotors 20 handelt es sich um die Hochdruckpumpe, die im Traktor 10 zum Antrieb von Arbeitsgeräten enthalten ist. Diese Hochdruckpumpe liefert beispielsweise einen Druck von 190 bar. Bei der Hydraulikpumpe 84 zur Versorgung des Schaltzylinders 72 handelt es sich um eine Niederdruckpumpe des Schleppers 10, die der Versorgung der Getriebeschmierung dient. Der Niederdruck beträgt beispielsweise 10 bar. Der Hydraulikdruck zur Versorgung des Schaltzylinders 72 kann auch aus dem Hochdruckkreis entnommen werden, sofern eine Druckreduzierung durch ein Reduzierventil erfolgt. In diesem Fall kann auf die Niederdruckhydraulikpumpe 84 völlig verzichtet werden.

Beim Einlegen eines Ganges oder bei Bremsbetätigung wird der Stromkreis zur Magnetspule 90 unterbrochen, so daß das Hydraulikventil 74 infolge der Federkraft in seine Ruhestellung, wie sie die Figur 4 darstellt, geführt wird. Dies bewirkt, daß der Hydraulikantrieb von der Antriebswelle abgekuppelt wird.

## Patentansprüche

1. Antrieb für Kraftfahrzeuge, insbesondere Schlepper, mit einem Verbrennungsmotor, dem wenigstens ein Schaltgetriebe und eine Antriebswelle (14) zum Antrieb der Vorder- und/oder Hinterräder (16, 18) nachgeordnet sind, und auf dessen Antriebswelle (14) ein Zahnrad (56) drehbar gelagert ist, welches durch eine axial verschiebbare Schaltmuffe (62) kraftschlüssig mit der Antriebswelle (14) verbindbar ist, und mit einem Hydraulikmotor (20) zum wahlweisen Antrieb der Antriebswelle (14), der von einer den Hochdruckhydraulikkreis des Fahrzeuges (10) aufrechterhaltenden Hydraulikpumpe (78, 84) gespeist wird und über Getriebemittel in ständigem Eingriff mit dem drehbar gelagerten Zahnrad (56) steht, dadurch gekennzeichnet, daß zur Leistungseinstellung des Hydraulikmotors (20) zwischen der Hydraulikpumpe (78, 84) und dem Hydraulikmotor (20) ein elektrisch steuerbares Proportionalventil (80) angeordnet ist, welches durch ein Potentiometer einstellbar ist.

2. Antrieb nach Anspruch 1, dadurch gekennzeichnet, daß bei fehlendem elektrischen Steuersignal das Proportionalventil (80) in eine Ruhestellung übergeht, bei der kein Hydraulikdruck an den Hydraulikmotor (20) abgegeben wird.

3. Antrieb nach Anspruch 1 oder 2, dadurch gekennzeichnet, daß ein elektrischer Steuerkreis mit einer Verriegelung vorgesehen ist, die den Hydraulikantrieb außer Funktion setzt, sofern ein Gang des Schaltgetriebes eingelegt ist.

4. Antrieb nach einem der Ansprüche 1 bis 3, dadurch gekennnzeichnet, daß ein elektrischer Steuerkreis mit einer Verriegelung vorgesehen ist, die bei Betätigung einer Bremse den Hydraulikantrieb abschaltet.

5. Antrieb nach einem der Ansprüche 1 bis 4, dadurch gekennzeichnet, daß ein elektrischer Steuerkreis mit einer Verriegelung vorgesehen ist, die nach dem Herausnehmen eines Ganges und/oder einer Bremsbetätigung die Inbetriebnahme des Hydraulikantriebes nur dann zuläßt, wenn zuvor das elektrische Steuersignal auf Null gesetzt wurde.

6. Antrieb nach einem der Ansprüche 1 bis 5, dadurch gekennzeichnet, daß ein elektrischer Steuerkreis mit einer Verriegelungsschaltung vorgesehen ist, die eine Inbetriebnahme des Fahrzeuges über das Zündschloß nur dann zuläßt, wenn der Hydraulikantrieb nicht in Eingriff mit dem Antriebsstrang des Fahrzeuges steht.

7. Antrieb nach einem der Ansprüche 1 bis 6, dadurch gekennzeichnet, daß die Antriebswelle (14) einen als Schaltmuffe (62) ausgebildeten, axial verschiebbaren, konzentrisch zur Welle angeordneten Zahnkranz (63) trägt, der durch axiale Verschiebung mit einem Zahnkranz (60) eines auf der Antriebswelle (14) drehbar gelagerten Zahnrades (56) in Eingriff bringbar ist, und daß das drehbar gelagerte Zahnrad (56) einen zweiten Zahnkranz (54) trägt, der mit dem Hydraulikmotor (20) in Verbindung steht.

8. Antrieb nach einem der Ansprüche 1 bis 7, dadurch gekennzeichnet, daß der Hydraulikmotor (20) am Hydraulikantriebsgehäuse (22) befestigt ist und eine sich in das Innere des Hydraulikantriebsgehäuses (22) erstreckende gezahnte Abtriebswelle (42) aufweist, daß die Abtriebswelle (42) von einer Zahnradhohlwelle (44) umgeben ist, welche eine Innenverzahnung (50), die mit der Verzahnung der Abtriebswelle (42) in Eingriff steht, und einen äußeren Zahnkranz (52) für die Kraftübertragung zur Antriebswelle (14) des Fahrzeuges trägt, und daß die Zahnradhohlwelle (44) im Hydraulikantriebsgehäuse (22) gelagert ist.

9. Antrieb nach Anspruch 8, dadurch gekennzeichnet, daß der äußere Zahnkranz (52) der Zahnradwelle (44) mit dem Zahnkranz (54) eines konzentrisch drehbar auf der Antriebswelle (14) des Fahrzeuges gelagerten Zahnrades (56) kämmt.

10. Antrieb nach einem der Ansprüche 1 bis 9, dadurch gekennzeichnet, daß die Antriebswelle (14) des Fahrzeuges im Bereich des Hydraulikantriebes geteilt ausgebildet ist und daß das eine Wellenende eine stirnseitige Ausnehmung (30) mit in Axialrichtung verlaufender Innenverzahnung und das andere Wellenende eine korrespondierende Außenverzahnung (28), die in die Innenverzahnung eingreift, aufweist, wodurch beide Wellenenden drehfest miteinander verbunden sind.

11. Antrieb nach einem der Ansprüche 1 bis 10, dadurch gekennzeichnet, daß zwischen Hydraulikantriebsgehäuse (22) und einem Kupplungsgehäuse (12) zwei axial hintereinander liegende Zwischenflansche (38, 40) vorgesehen sind.

12. Antrieb nach einem der Ansprüche 1 bis 11, dadurch gekennzeichnet, daß an Stelle der Schaltmuffe eine Lamellenkupplung Verwendung findet.

13. Antrieb nach einem der Ansprüche 1 bis 12, dadurch gekennzeichnet, daß die Schaltmuffe (62) bzw. die Lamellenkupplung über ein Hebelgestänge (66) mit einem Schaltzylinder (72) verbunden ist, und daß der Schaltzylinder (72) durch ein elektromagnetisch steuerbares Hydraulikventil (74) betätigbar ist.

14. Antrieb nach Anspruch 13, dadurch gekennzeichnet, daß der Schaltzylinder (72) durch einen Niederdruckhydraulikkreis des Kraftfahrzeuges gespeist wird.

15. Antrieb nach Anspruch 13 oder 14, dadurch gekennzeichnet, daß bei fehlendem Steuersignal das Hydraulikventil (74) den Hydraulikdruck zum Schaltzylinder (72) unterbricht, so daß der Schaltzylinder (72) in seine unbelastete Stellung übergeht und den Hydraulikmotor (20) von der Antriebswelle (14) des Fahrzeuges abkuppelt.

## Claims

1. Drive for motor vehicles, in particular tractors, with an internal combustion engine after which at least a change-speed gear and a propeller shaft (14) for driving the front and/or rear wheels (16, 18) are arranged and on whose propeller shaft (14) there is rotatably mounted a gear wheel (56) connectable with the propeller shaft (14) by an axially slidable control sleeve (62) to complete the power train, and with a hydraulic motor (20) for selective drive of the propeller shaft (14) which is fed by a hydraulic pump (78, 84) maintaining the high-pressure hydraulic circuit of the vehicle (10) and is in constant engagament with the rotatably mounted gear wheel (56) by way of gear means, characterised in that an electrically controllable proportional valve (80) adjustable by means of a potentiometer is arranged between the hydraulic pump (78, 84) and the hydraulic motor (20) for adjusting the output of the hydraulic motor (20).

2. Drive according to claim 1, characterised in that in the absence of an electric control signal the proportional valve (80) changes over to an inoperative position in which no hydraulic pressure is delivered to the hydraulic motor (20).

3. Drive according to claim 1 or 2, characterised in that an electric control circuit is provided with a locking means which puts the hydraulic drive out of operation if a gear of the change-speed gear is engaged.

4. Drive according to andy one of claims 1 to 3, characterised in that an electric control circuit is provided with a locking means which disconnects the hydraulic drive on actuation of a brake.

5. Drive according to any one of claims 1 to 4, characterised in that an electric control circuit is provided with a locking means which, after disengagement of a gear and/or actuation of a brake, allows the hydraulic drive to be put into operation only when the electric control signal has been put to zero beforehand.

6. Drive according to any one of claims 1 to 5, characterised in that an electric control circuit is provided with a locking circuit which allows the vehicle to be put into operation through the medium of the ignition lock only when the hydraulic drive is not in engagement with the driving train of the vehicle.

7. Drive according to any one of claims 1 to 6, characterised in that the propeller shaft (14) carries an axially slidable toothed ring (63) in the form of a control sleeve (62) and arranged concentrically with the shaft and which can be brought by axial sliding into engagement with a toothed rim (60) of a gear wheel (56) rotatably mounted on the propeller shaft (14),and the rotatably mounted gear wheel (56) carries a second toothed rim (54) connected to the hydraulic motor (20).

8. Drive according to any one of claims 1 to 7, characterised in that the hydraulic motor (20) is fixed to the hydraulic drive housing (22) and has a toothed driven shaft (42) extending into the interior of the hydraulic drive housing (22), the driven shaft (42) is surrounded by a hollow gear-wheel shaft (44) bearing an internal toothing (50) in mesh with the toothing of the driven shaft (42), and also bearing an external toothed rim (52) for transmitting power to the propeller shaft (14) of the vehicle, and the hollow gear-wheel shaft (44) is mounted in the hydraulic drive housing (22).

9. Drive according to claim 8, characterised in that the external toothed rim (52) of the gear-wheel shaft (44) meshes with the toothed rim (54) of a gear wheel (56) mounted to be rotatable concentrically on the propeller shaft (14) of the vehicle.

10. Drive according to any one of claims 1 to 9, characterised in that the propeller shaft (14) of the vehicle is of divided form in the region of the hydraulic drive and one shaft end has an end recess (30) with internal toothing extending in the axial direction and the other shaft end has a corresponding external toothing (28) engaging in the internal toothing, whereby the two shaft ends are connected to be fast in rotation with one another.

11. Drive according to any one of claims 1 to 10, characterised in that two intermediate flanges (38, 40) lying one behind the other axially are provided between the hydraulic drive housing (22) and a clutch housing (12).

12. Drive according to any one of claims 1 to 11, characterised in that a disc clutch is employed instead of the control sleeve.

13. Drive according to any one of claims 1 to 12, characterised in that the control sleeve (62) or the disc clutch is connected to a control cylinder (72) by way of a lever linkage (66), and the control cylinder (72) can be operated by an electromagnetically controllable hydraulic valve (74).

14. Drive according to claim 13, characterised in that the control cylinder (72) is fed by a low pressure hydraulic circuit of the vehicle.

15. Drive according to claim 13 or 14, characterised in that in the absence of a control signal the hydraulic valve (74) interrupts the hydraulic pressure to the control cylinder (72), so that the control cylinder (72) changes over to its no-load position and uncouples the hydraulic motor (20) from the propeller shaft (14) of the vehicle.

## Revendications

1. Entraînement pour véhicules à moteur, notamment tracteurs agricoles, avec un moteur à combustion, à la suite duquel sont reliés au moins une boîte de vitesses et un arbre de transmission (14) pour entraîner les roues avant et/ou arrière (16, 18), une roue dentée (56) étant montée à rotation sur l'arbre de transmission (14), laquelle peut, au moyen d'un manchon de commutation axialement coulissant (62), être liée par adhérence à l'arbre de transmission (14), et avec un moteur hydraulique (20), qui est destiné à entraîner sélectivement l'arbre de transmission (14) et qui est alimenté par une pompe hydraulique (78, 84), maintenant en service le circuit hydraulique sous haute pression du véhicule (10), et est en permanence en prise, par des moyens de transmission, avec la roue dentée (56) montée à rotation, **caractérisé** en ce qu'afin de régler la puissance du moteur hydraulique (20), un limiteur de pression proportionnel (80) à commande électrique, qui peut être réglé par un potentiomètre, est disposé entre la pompe hydraulique (78, 84) et le moteur hydraulique (20).

2. Entraînement selon la revendication 1, **caractérisé** en ce qu'en l'absence de signal de commande électrique, le limiteur de pression proportionnel (80) se place dans une position de repos, dans laquelle aucune pression hydraulique n'est délivrée au moteur hydraulique (20).

3. Entraînement selon la revendication 1 ou 2, **caractérisé** en ce qu'il est prévu un circuit électrique de commande avec un verrouillage, qui met l'entraînement hydraulique hors service dans la mesure où une vitesse de la boîte de vitesses est enclenchée.

4. Entraînement selon l'une quelconque des revendications 1 à 3, **caractérisé** en ce qu'il est prévu un circuit électrique de commande avec un verrouillage, qui coupe l'entraînement hydraulique lors de l'actionnement d'un frein.

5. Entraînement selon l'une quelconque des revendications 1 à 4, **caractérisé** en ce qu'il est prévu un circuit électrique de commande avec un verrouillage qui, à la suite de l'enlèvement d'une vitesse et/ou d'un actionnement de frein, n'autorise la mise en service de l'entraînement hydraulique que si le signal électrique de commande a été préalablement mis à zéro.

6. Entraînement selon l'une quelconque des revendications 1 à 5, **caractérisé** en ce qu'il est prévu un circuit électrique de commande avec un circuit de verrouillage qui n'autorise la mise en marche du véhicule par la clé de contact que si l'entraînement hydraulique n'est pas en prise avec l'ensemble d'entraînement du véhicule.

7. Entraînement selon l'une quelconque des revendications 1 à 6, **caractérisé** en ce que l'arbre de transmission (14) porte une couronne dentée (63), axialement coulissante et disposée concentriquement à l'arbre, qui se présente sous la forme d'un manchon de commutation (62) et qui, par coulissement axial, peut être amenée en prise avec une couronne dentée (60) d'une roue dentée (56) montée à rotation sur l'arbre de transmission (14), et en ce que la roue dentée (56) montée à rotation porte une seconde couronne dentée (54), qui est reliée au moteur hydraulique (20).

8. Entraînement selon l'une quelconque des revendications 1 à 7, **caractérisé** en ce que le moteur hydraulique (20) est fixé sur le carter d'entraînement hydraulique (22), et présente un arbre de sortie denté (42) s'étendant à l'intérieur du carter d'entraînement hydraulique (22), en ce que l'arbre de sortie (42) est entouré par un arbre creux de roue dentée (44), qui porte une denture intérieure (50), qui est en prise avec la denture de l'arbre de sortie (42), et une couronne dentée extérieure (52) pour la transmission de force vers l'arbre de transmission (14) du véhicule, et en ce que l'arbre creux de roue dentée (44) est monté dans le carter d'entraînement hydraulique (22).

9. Entraînement selon la revendication 8, **caractérisé** en ce que la couronne dentée extérieure (52) de l'arbre de roue dentée (44) est en prise avec la couronne dentée (54) d'une roue dentée (56) montée concentriquement à rotation sur l'arbre de transmission (14) du véhicule.

10. Entraînement selon l'une quelconque des revendications 1 à 9, **caractérisé** en ce que l'arbre de transmission (14) du véhicule est réalisé divisé dans la région de l'entraînement hydraulique, et en ce qu'un bout d'arbre présente un évidement terminal (30) avec une denture intérieure s'étendant en direction axiale, et l'autre bout d'arbre présente une denture extérieure correspondante (28), qui s'engage dans la denture intérieure, de sorte que les deux bouts d'arbre sont mutuellement assemblés en solidarité de rotation.

11. Entraînement selon l'une quelconque des revendications 1 à 10, **caractérisé** en ce que deux brides intermédiaires (38, 40), disposées axialement l'une à la suite de l'autre, sont prévues entre le carter d'entraînement hydraulique (22) et un carter d'embrayage (12).

12. Entraînement selon l'une quelconque des revendications 1 à 11, **caractérisé** en ce qu'on utilise un embrayage à disques multiples à la place du manchon de commutation.

13. Entraînement selon l'une quelconque des revendications 1 à 12, **caractérisé** en ce que le manchon de commutation (62) ou, selon le cas, l'embrayage à disques multiples, est relié par l'intermédiaire d'une tringlerie à levier (66) à un cylindre de commutation (72), et en ce que le cylindre de commutation (72) peut être actionné par un distributeur hydraulique (74) à commande électromagnétique.

14. Entraînement selon la revendication 13, **caractérisé** en ce que le cylindre de commutation (74) est alimenté par un circuit hydraulique à basse pression du véhicule à moteur.

15. Entraînement selon la revendication 13 ou 14, **caractérisé** en ce qu'en l'absence de signal de commande, le distributeur hydraulique (74) interrompt l'alimentation en pression hydraulique du cylindre de commutation (72), de sorte que le cylindre de commutation (72) se place dans sa position non sollicitée et désaccouple le moteur hydraulique (20) de l'arbre de transmission (14) du véhicule.
